# EUROPEAN PATENT APPLICATION

(11) **EP 1 507 249 A1**
(43) Date of publication of application: **16.02.2005**
(21) Application number: 03255000.6
(22) Date of filing: 12.08.2003
(51) Int. Cl.: G09G 3/00, G06T 3/60, G09G 5/393, G09G 5/399

(54) **Display controller for rotation of display image**

(71) Applicant: ARM Limited, Cherry Hinton, Cambridge CB1 9NJ (GB)
(72) Inventor: Stevens, Ashley Miles, Cambridge, CB5 9AE (GB)
(74) Representative: Horner, David Richard

(57) **Abstract**

Display controllers are typically optimised to suit displays arranged in one orientation. Increasingly, displays are provided which may be used in a variety of orientations. Accordingly, a display controller (5') is provided for controlling a display (40) having a plurality of pixels (60) forming a frame, the frame comprising a plurality of lines of the pixels. Frame storage means (20) store a frame of pixel values arranged as a plurality of adjacent tiles (70;70';70";70"'), each tile comprising a plurality of pixel values, each pixel value being associated with a pixel of the display. A plurality of line buffers (80;80';80") store respective lines of pixel values of the frame. Also, tile selection logic (10') retrieves tiles from the frame storage means and provides the tiles to the line buffers for subsequent supply to the display, the tile selection logic being operable to receive an indication of rotation of the display, and to retrieve the tiles in an order dependent on the indication of rotation so as to cause a counter-rotated frame to be displayed in the event that the display is rotated. When the display is rotated to a new orientation, the tile selection logic retrieves adjacent tiles from the frame storage means in a different order to thereby cause the frame to be displayed on the display in a manner which counters the effect of its rotation. Through this approach, the pixel values in the frame storage means are not required to be updated to account for any change in rotation of the display. Furthermore, access efficiency is maintained by retrieving data from the frame storage means since complete tiles comprising a plurality of pixels are retrieved instead of retrieving individual pixels.

## Description

### Field of the Invention

The present invention relates to a display controller.

### Background to the Invention

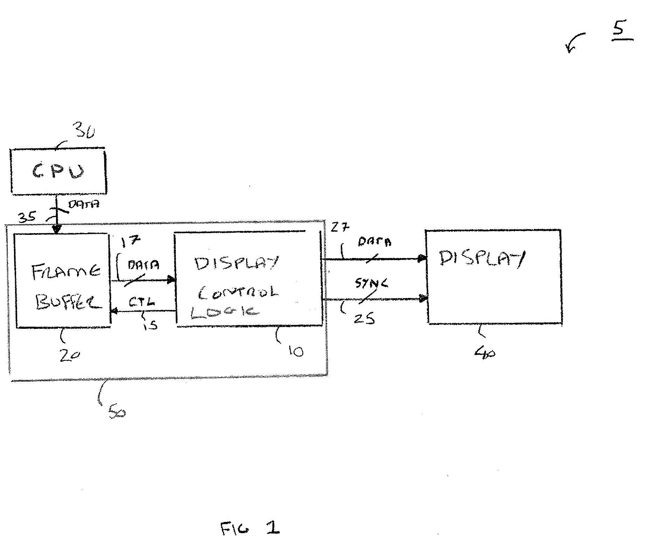

Display controllers are known. One such display controller 50 is shown in the display system, generally 5, illustrated by figure 1. The display controller 50 comprises a frame buffer 20 and display control logic 10. The frame buffer 20 stores a frame of pixel values provided by a CPU 30 over the data bus 35. The display control logic 10 sends control signals to the frame buffer 20 over the control bus 15 to access pixel values from the frame buffer 20. The pixel values accessed from the frame buffer 20 are subsequently passed by the display control logic 10 to the display 40 over the data bus 27 together with any synchronisation and timing signals that may be required over the synchronisation bus 25. The frame of pixel values may represent, for example, a picture or a frame of video data.

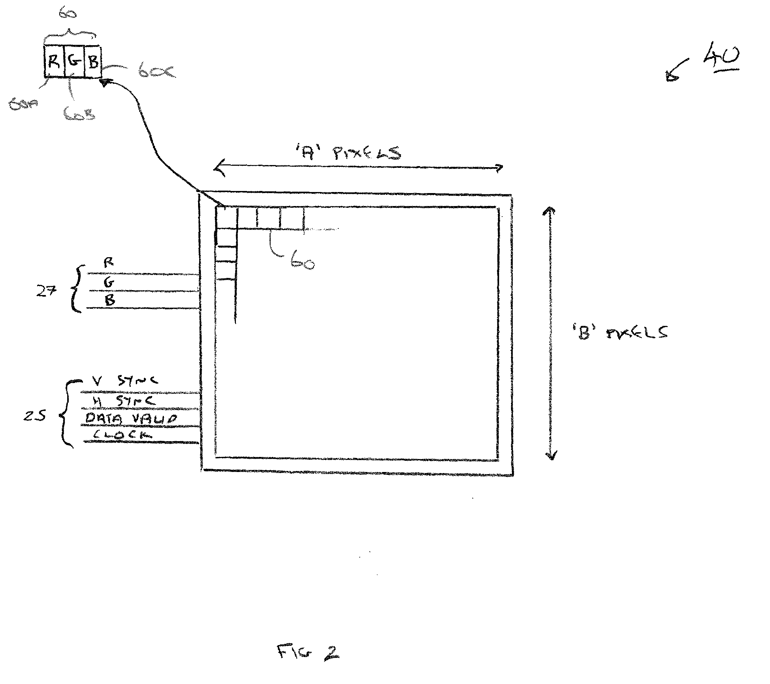

Figure 2 illustrates in more detail an example arrangement of the display 40. The display 40 comprises a number of pixels 60. In this example, the display has "A" pixels in the 'horizontal' direction and "B" pixels in the 'vertical' direction. The "A" pixels in the horizontal direction form a line. Each pixel 60 comprises a red, green and blue colour component 60A, 60B, 60C.

The display 40 receives pixel values as colour component signals or data, in this case separate red, green and blue colour component pixel values, over the data bus 27. The display 40 also receives vertical synchronisation, horizontal synchronisation, data valid and clock signals or data over the timing and synchronisation bus 25 which provides timing and control signals to control the display of the pixel values on the display 40.

Traditionally, the display 40 is scanned in accordance with a predetermined scanning pattern, such as a so-called 'raster' scan, which scans each line from the leftmost pixel to the right-most pixel, with lines being scanned from the top line to the bottom line.

Accordingly, the display control logic 10 will read pixel values from the frame buffer 20 in this scanning order. The frame buffer 20 is typically implemented in synchronous dynamic random access memory (SDRAM) for cost reasons. However, it will be appreciated that whilst SDRAM is very efficient when accessing data in sequential bursts, it is very inefficient when performing non-sequential accesses due to the latency of such accesses. Accordingly, the pixel values are stored in the frame buffer 20 in conformity with the scanning order which improves access efficiency since this enables pixels values to be accessed in sequential bursts.

However, an increasing number of devices have displays 40 which may be viewed in a variety of different orientations such as, for example, the display 40 of a mobile phone, or a personal digital assistant. When the display 40 is rotated to a new orientation, it will be appreciated that the image being displayed will then be in an incorrect orientation.

One possible solution would be to read the pixel values from the frame buffer 20 in a different order such as, for example, reading the first pixel from each line, then the second pixel value from each line, and so. However, such accesses to the frame buffer are very inefficient since they result in an increased number of non-sequential accesses being made.

Another possible solution is to re-write the pixels values in the frame buffer 20 to account for the new orientation of the display 40. However, it will be appreciated that such an approach is also very inefficient since this requires the CPU 30 to completely re-write the contents of the frame buffer 20 each time a new orientation is selected. Also, it will be appreciated that this approach increases complexity in writing to the frame buffer 20 since a different writing pattern would need to be adopted dependent upon the current orientation of the display 40.

Accordingly, it is desired to provide an improved technique for controlling a display which may be used in a variety of orientations.

### Summary of the Invention

According to a first aspect of the present invention there is provided a display controller for controlling a display having a plurality of pixels forming a frame, the frame comprising a plurality of lines of the pixels, the display controller comprising: frame storage means operable to store a frame of pixel values arranged as a plurality of tiles, each tile comprising a plurality of pixel values, each pixel value being associated with a pixel of the display; a plurality of line buffers, each line buffer being operable to store a line of pixel values of the frame; and tile selection logic operable to retrieve tiles from the frame storage means and to provide the tiles to the line buffers for subsequent supply to the display, the tile selection logic being operable to receive an indication of rotation of the display, and to retrieve the tiles in an order dependent on the indication of rotation so as to cause a counter-rotated frame to be displayed in the event that the display is rotated.

Each pixel value in the frame is associated with a tile. By storing pixel values arranged as a plurality of adjacent tiles, these complete tiles can be retrieved by tile selection logic in a predetermined order and stored in the line buffers. Pixel values from tiles are stored in line buffers and lines of pixel values can then be supplied to display.

The order of retrieval of the tiles from the frame buffer is dependent upon the orientation of the display. Hence, when the display is rotated to a new orientation, the tile selection logic can then retrieve adjacent tiles from the frame storage means in a different order to thereby cause the frame to be displayed on the display in a manner which counters the effect of its rotation.

Through this approach, it will be appreciated that the pixel values in the frame storage means are not required to be updated to account for any change in rotation of the display. Furthermore, access efficiency is maintained when retrieving data from the frame storage means since complete tiles comprising a plurality of pixels are retrieved instead of retrieving individual pixels.

It has been found that this arrangement matches well with compression algorithms for video such as MPEG2, MPEG4, and H.264. Also, this arrangement matches well with tiled graphics accelerators. Finally, this approach increases the in-page accesses (accesses within a common row) of many other frame buffer accesses. By way of illustration, in an example SDRAM arrangement, is it not just sequential accesses to the frame storage means which are fast, but accesses within a common row are also fast. Horizontal line drawing in the prior art approach is all in-page since it requires accesses within a common row. However, vertical line drawing in the prior art approach results in page misses since each subsequent access is in a different row. So one type of drawing is very fast and one type of drawing is very slow. Similarly, for diagonal lines, in the prior art approach, this nearly always results in page misses. However, in the present approach, similar access performance is achieved in any drawing direction since more common row accesses occur.

Preferably, the frame storage means is operable to store a frame of pixel values arranged in a predetermined order irrespective of any rotation of the display.

Because the frame storage means always stores the pixel values in the same predetermined order irrespective of the orientation of the display, there is no need for the pixel values to be updated should the orientation of the display change. It will be appreciated that this provides significant advantages over other techniques which require the contents of the frame storage means to be updated each time the orientation of the display changes.

Preferably, a first pixel value of each tile stored in the frame storage means is accessible by a non-sequential access of the frame storage means and all subsequent pixel values of that tile are accessible by sequential accesses.

Arranging for accesses of data values within a tile to be sequential provides significant efficiency gains. Accordingly, tiles can be retrieved from the frame storage means in sequential bursts which it will be appreciated significantly improves the performance of those accesses.

Preferably, each tile comprises 2^{p} by 2^{p} pixel values, where 'p' is a positive integer.

Arranging tiles to have an equal number of pixels in both directions (i.e. the tile is square) significantly simplifies downstream processing of these tiles which would otherwise become more complex when the orientation of the display changes.

Preferably, 2^{p} line buffers are provided forming a line buffer group.

Forming a line buffer group, which has the same number of line buffers as the number of lines in a tile, ensures that a sufficient number of line buffers are provided to enable all the pixel values of each tile to be retrieved and stored in a sequential burst.

Alternatively, 2^{p}x2 line buffers are provided forming two line buffer groups and the tile selection logic is operable to store predetermined tiles from the frame storage means to one line buffer group whilst the other line buffer group supplies its contents to the display.

Providing two line buffer groups ensures that pixel values from one line buffer group can be provided to the display whilst, simultaneously, pixel values can be retrieved from the frame storage means and stored in the other line buffer group for subsequent supply to the display.

In preferred embodiments, the frame storage means is operable to store pixel values arranged to form tiles of selectable 2^{p} by 2^{p} pixel value sizes, each of the selectable tile sizes having a first pixel value accessible by a non-sequential access of the frame storage means and all subsequent pixel values of that tile accessible by sequential accesses.

The pixel values in the frame buffer are arranged to form a number of tiles. The size of these tiles is selectable. The pixel values are stored such that irrespective of the selected size of the tile, the pixel values within the selected size of tile can be accessed by a sequential burst. Accordingly, the pixels values are stored in a predetermined order such that this sequentiality is maintained for the differing tile sizes. Once a tile size is selected, all tiles in that frame will be retrieved having the same selected size.

It will be appreciated that by storing pixel values in the frame buffer in this manner provides significant flexibility since differing tile sizes can be selected depending on the size of sequential burst of pixel values that can be supported downstream. Also, it will be appreciated that by storing pixel values in the frame buffer in this manner enables the implementation of the frame buffer to be decoupled from the implementation of the remaining components of the display controller and enables the same pixel value storage pattern to be used irrespective of the eventual size of tile that will be used.

In preferred embodiments, the tile size is selected based upon the number of line buffers accessible.

Hence, the size of the tile that is selected can be optimised based on the number of line buffers that are accessible. It will be appreciated that optimising the tile size based on the number of line buffers available can maximise the number of pixels accessed in a sequential burst, which optimises the access efficiency.

Preferably, if 2^{p}x2 line buffers are provided, then the tile size is selected to be 2^{p} by 2^{p} pixel values.

By making the tile size to be 2^{p} by 2^{p} pixel values ensures that 2^{p} line buffers can be provided as a group of line buffers which can supply pixel values to the display whilst the other group of 2^{p} line buffers can be used for storing tiles being retrieved by the tile selection logic from the frame storage means.

In one embodiment, the frame comprises "n" by "m" tiles.

"n" and "m" may be the same or different values. When the aspect ratio of the screen is other than 1:1, it will be appreciated that "n" and "m" will be different values. In this situation, it will be appreciated that when the display is in certain orientations then the display may be unable to support sufficient numbers of tiles in one direction to display the complete frame of pixel values. Accordingly, some tiles may need to cropped and lost.

In embodiments, each of the plurality of line buffers is operable to store up to the larger of "n" multiplied by "2^{P}" and "m" multiplied by "2^{P}" pixel values.

Accordingly, it will be appreciated that each line buffer has sufficient storage capacity to store the maximum number of pixel values retrieved from the frame buffer for a particular line.

In preferred embodiments, a display rotation indicator is provided which is operable to provide an indication to the tile selection logic of the orientation of the display, the orientation being one of four orthogonal orientations.

Hence, the tile selection logic may receive an indication of whether the display is in either a standard orientation, a 90 degrees clockwise orientation, a 180 degrees clockwise orientation, or a 270 degrees clockwise orientation. Accordingly, the tile selection logic can retrieve tiles in a different in order to cause a counter-rotated frame to be displayed which counters any rotation of the display.

Preferably, the display is arranged to apply pixel values to pixels in accordance with a predetermined scanning pattern and the tile selection logic is operable to retrieve tiles in the order from the frame storage means and to provide the tiles to the line buffers for subsequent supply to the display in accordance with the predetermined scanning pattern.

Hence, the same predetermined scanning pattern such as, for example, a raster scan can be performed by the display irrespective of the orientation of the display. Tiles are retrieved into line buffers in a particular order dependent on the orientation of the display and the line buffers can then be read to provide a frame in the correct orientation which can be scanned by the display in a conventional manner.

Preferably, the tile selection logic comprises transform logic operable, in response to the indication of rotation of the display indicating that said display is rotated, to apply a transform to counter-rotate the pixels of each retrieved tile prior to supply to the display.

The contents of each tile itself is counter-rotated, as required. By counterrotating each tile, the frame is comprised of counter-rotated tiles, the contents of which are also counter-rotated. The counter-rotation can be achieved in each tile by reading out pixel values stored in the frame storage means in a different order to which they were written. Hence, a complete counter-rotated frame can be displayed.

### Brief Description of the Drawings

Embodiments of the present invention will now be described, by way of example, with reference to the accompanying drawings in which:
Figure 1 illustrates a display system;
Figure 2 illustrates the arrangement of a typical display;
Figure 3 illustrates the arrangement of the display where the pixels are arranged as tiles;
Figure 4 illustrates a display system according to a first embodiment;
Figure 5A illustrates the arrangement of tiles in a frame buffer and their retrieval into two groups of line buffers for subsequent display on a screen in a normal orientation;
Figure 5B illustrates the arrangement of tiles in a frame buffer and their retrieval into two groups of line buffers for subsequent display on a screen for a 90 degrees clockwise rotation;
Figure 5C illustrates the arrangement of tiles in a frame buffer and their retrieval into two groups of line buffers for subsequent display on a screen for a 180 degrees clockwise rotation;
Figure 5D illustrates the arrangement of tiles in a frame buffer and their retrieval into two groups of line buffers for subsequent display on a screen for a 270 degrees clockwise rotation;
Figure 6 illustrates an arrangement of pixel values within a portion of a frame buffer which provides tiles having different selectable sizes; and
Figures 7A to 7C illustrates the retrieval of different tile sizes based on the number of accessible line buffers.

### Description of Preferred Embodiments

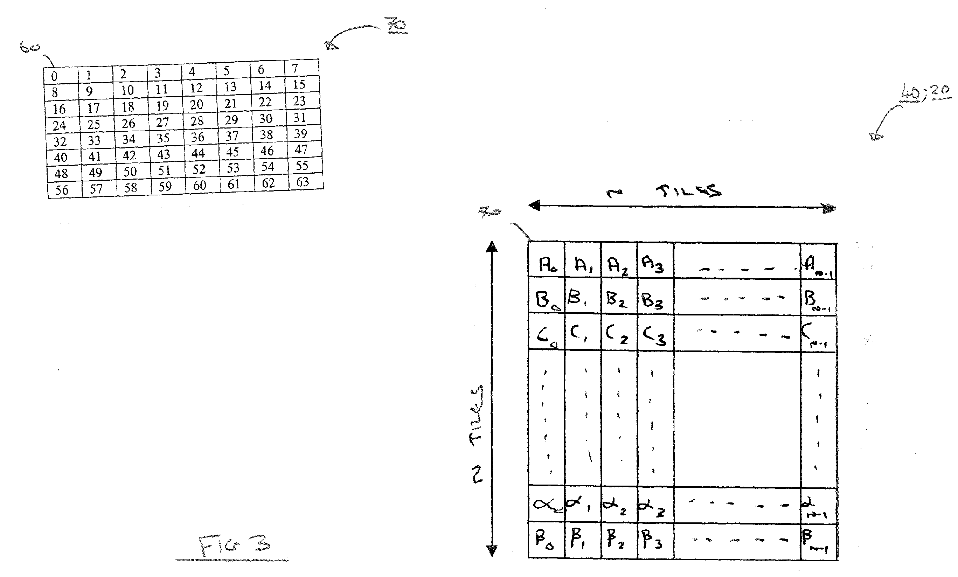

Figure 3 illustrates an arrangement of the display 40 using tiles. The display 40 comprises an array of pixels 60 as illustrated in figure 2.

The pixels 60 in the display 40 are arranged to form adjacent tiles 70. Each tile 70 comprises, for example, 8 pixels by 8 pixels and hence there are 64 pixels in each tile 70. For this example display 40 the pixels are arranged to form N tiles by N tiles.

The pixels 60 in the display 40 are numbered as illustrated in figure 3. Within each tile 70, the 64 pixels are numbered consecutively starting with the top leftmost pixel in that tile 70 with pixel numbers increasing along the line of pixels until the last pixel in that line is reached. The next pixel comprises the leftmost pixel in the next line down with numbers increasing along that line of pixels until the last pixel in that line is reached and so on.

The tiles 70 are ordered in a similar manner, i.e. starting with the top leftmost tile A₀ and then numbering increasing along the line of tiles (A₁, A₂, A₃ etc.) until the last tile A_{N-1} in that line is reached. The next tile comprises the leftmost tile B₀ in the next line of tiles down with numbers increasing along that line of tiles (B₁, B₂, B₃ etc.) until the last tile B_{N-1} in that line is reached and so on.

Accordingly, given that the top leftmost pixel in tile A₀ is numbered '0', the top leftmost pixel in tile A₁ will be pixel '64', and so on.

The arrangement of the frame buffer 20 is such that it mirrors the arrangement of the display 40.

The frame buffer is generally of the SDRAM type which it will be appreciated exhibits a relatively long initial access time to a random address which is the subject of a non-sequential access, but that sequential accesses thereafter can be performed more quickly.

Accordingly, within each tile in the frame buffer 20, the 64 pixel values are arranged to be addressed sequentially. Hence, each tile can be accessed by specifying the address of the first pixel value in that tile, which is likely to result in a non-sequential access, and then performing sequential accesses to the remaining 63 pixel values in that tile. By addressing the pixel values in the frame buffer in this way, the efficiency of tile accesses is improved.

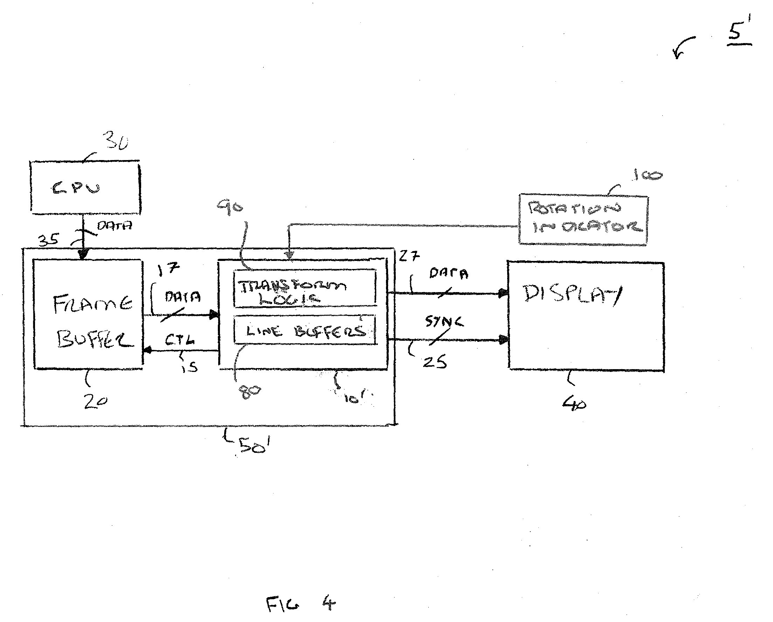

Figure 4 illustrates a display system 5' according to one embodiment. The display system is generally as described with reference to figure 1, however, the pixel values are arranged in the frame buffer 20 as described in figure 3. Also, the display control logic 10' comprises a number of line buffers 80 and transform logic 90. Furthermore, a rotation indicator 100 is provided which provides an indication of the orientation of the display 40.

As will be explained in more detail below, the line buffers 80 can be configured to store pixel values of tiles 70 retrieved from the frame buffer 20 and the transform logic can apply a transform to the arrangement of the pixel values within such retrieved tiles 70 dependent on an indication received from the rotation indicator 100 in order to compensate for any rotation.

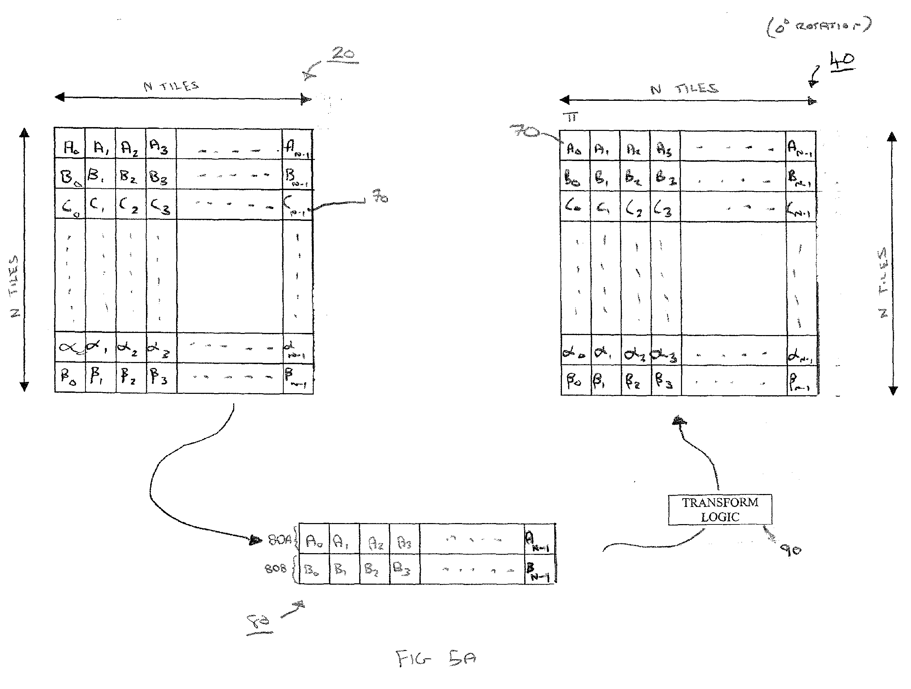

Figures 5A to 5D illustrate the operation of the display controller 10' having a frame buffer 20 which utilises tiles 70 when controlling the display in different orientations.

The frame buffer 20 is arranged to store pixel values arranged as tiles 70 as described above. In this example arrangement, N² tiles are provided per frame. The pixel values in each tile 70 may be accessed by a non-sequential access for a first pixel value in that tile followed by sequential accesses for the remaining pixel values in that tile.

A number of line buffers 80 are also provided which temporarily store pixel values retrieved from the frame buffer 20 and provide those pixel values to the display 40. The line buffers 80 are arranged into two groups of line buffers 80A, 80B. By providing two groups of line buffers, a first group can supply pixel values to the display 40 whilst the second group are accessing pixel values from the frame buffer.

In an example case where each tile 70 comprises 8 pixel values by 8 pixel values, each line buffer in the group will be operable to store 8N pixel values and each line buffer group will comprise 8 line buffers.

However, in embodiments where the aspect ratio of the display is other than 1:1, then each line buffer will be operable to store the larger of the number of pixel values in the horizontal direction and the number of pixel values in the vertical direction.

The line buffers 80 are typically static random access memory (SRAM) which are equally efficient for non-sequential and sequential accesses.

The display 40 is operable to apply pixel values to pixels in accordance with a raster scanning pattern. The orientation of the display is indicated by the presence of the Π symbol in the figures.

For figure 5A, the display 40 is in a standard, conventional orientation.

The rotation indicator 100 will provide an indication to the display controller 10' of the current orientation of the display 40.

Hence, for this orientation, the scanning pattern starts at the top leftmost pixel in tile A₀ and then scans all the pixels of the top line of all the tiles A₀ through to A_{N-1}. Thereafter, the next line down is selected and scanning returns to the leftmost pixel in tile A₀ and then scans all the pixels of the next line of all the tiles A₀ through to A_{N-1}, and so on.

Accordingly, in order to provide pixel values to the display 40 at the correct time for the scanning pattern, tiles A₀ to A_{N-1} are first read from the frame buffer 20 and stored in one group of 8 line buffers 80A. Once these tiles have been read, the group of 8 line buffers 80A can provide these pixel values to the display 40 via the transform logic 90.

Concurrently with providing these pixel values to the display 40, tiles B₀ to B_{N-1} are read from the frame buffer 20 and stored in the other group of 8 line buffers 80B. Once these tiles have been read, this group of 8 line buffers 80B can provide the pixel values to the display via the transform logic 90 whilst tiles C₀ to C_{N-1} are read from the frame buffer 20 and stored in the other group of 8 line buffers 80A, and so on until the whole frame has been read and provided for scanning by the display 40.

In this case, no rotation has occurred and so the transform logic 90 does not apply any transform to the pixel values within each tile 70.

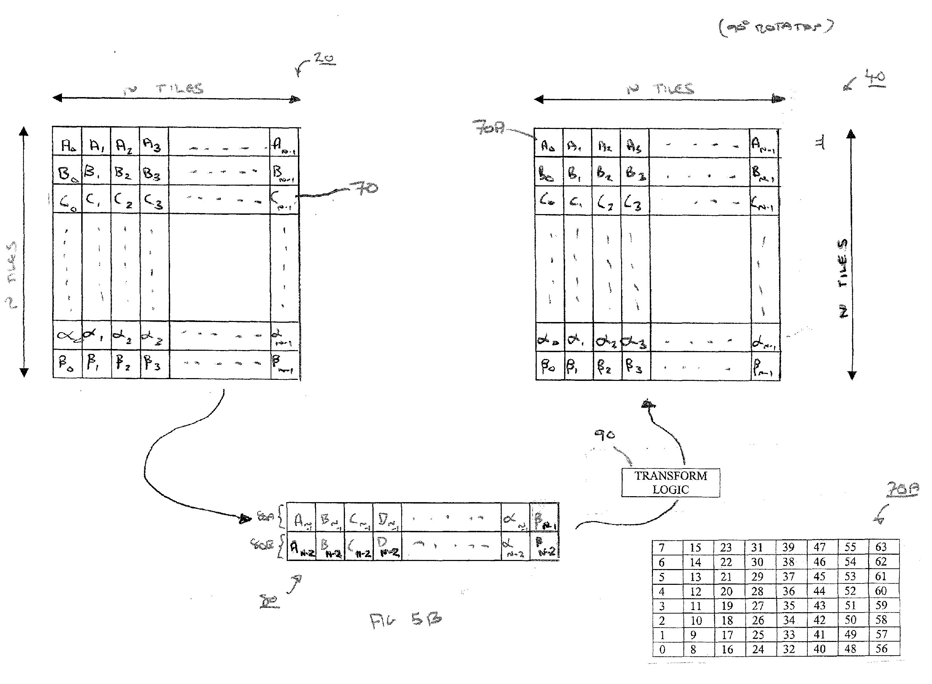

In figure 5B, the display 40 has been rotated 90 degrees clockwise (or 270 degrees anti-clockwise) as indicated by the new location of the Π symbol. The rotation indicator 100 will provide an indication to the display controller of the current orientation of the display 40. The display 40 continues to apply the raster scanning pattern and, hence, if the tiles were retrieved from the frame buffer 20 in the same order as for figure 5A then the frame displayed would be also rotated by 90 degrees clockwise.

Accordingly, in order to correct for the 90 degrees clockwise rotation, it is necessary to display a counter-rotated frame, i.e. a frame which has been rotated 90 degrees anti-clockwise as illustrated in figure 5B.

As mentioned above, the display 40 continues to apply the raster scanning pattern and so the scanning pattern starts with the top rightmost pixel in tile A_{N-1} and then scans downwards all the pixels of the rightmost line of all the tiles A_{N-1} through to β_{N-1}. Thereafter, the next line to the left is selected and scanning returns to the top pixel in tile A_{N-1} and then scans downwards all the pixels of the next line of all the tiles A_{N-1} through to β_{N-1}, and so on.

Accordingly, in order to provide pixel values to the display 40 at the correct time for the scanning pattern the tiles are retrieved from the frame buffer 20 in a different order. Hence, tiles A_{N-1} to β_{N-1} are first read from the frame buffer 20 and stored in one group of 8 line buffers 80A. Once these tiles have been read, the group of 8 line buffers 80A can provide the pixel values to the display 40 via the transform logic 90. Concurrently with providing these pixel values to the display, tiles A_{N-2} to β_{N-2} are read from the frame buffer 20 and stored in the other group of 8 line buffers 80B. Once these tiles have been read, this group of 8 line buffers 80B can provide the pixel values to the display 40 via the transform logic 90 whilst tiles A_{N-3} to β_{N-3} are read from the frame buffer and stored in the first group of 8 line buffers 80A, and so on until the whole frame has been read and provided to the display 40.

It will be appreciated that since the display 40 has rotated, it is necessary to also similarly counter-rotate the pixel values of each tile 70. This counter-rotation is performed by applying a transform to tiles 70 in the 8 line buffers 80A, 80B to generate a counter-rotated tile 70A. It will be appreciated that this transform could be performed as a separate process or could be performed as part of the writing into the 8 line buffers 80A, 80B or as part of the reading from the 8 line buffers 80A, 80B.

As indicated previously, due to the nature of the SRAM line buffers 80, either option is equally efficient since the line buffers 80 perform equally well for sequential and non-sequential accesses.

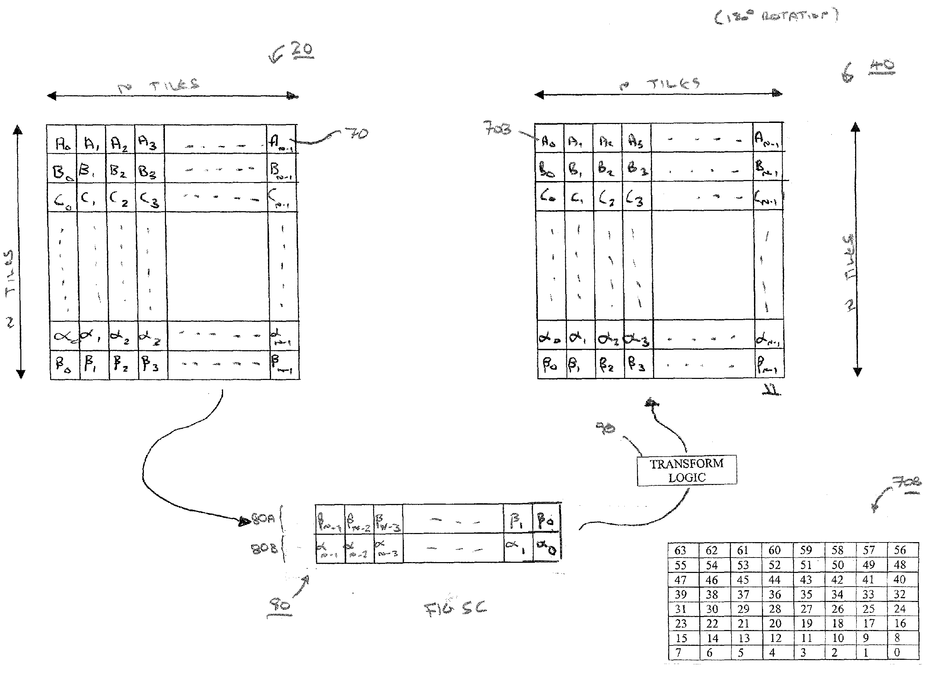

In figure 5C, the display 40 has been rotated 180 degrees clockwise (or anti-clockwise) as indicated by the new location of the Π symbol. The rotation indicator 100 will provide an indication to the display controller 10' of the current orientation of the display 40. The display 40 continues to apply the traditional scanning pattern and, hence, if the tiles 70 were retrieved from the frame buffer 20 in the same order as for figure 5A then the frame displayed would be also rotated by 180 degrees clockwise.

Accordingly, in order to correct for the 180 degrees clockwise rotation, it is necessary to display a counter-rotated frame, i.e. a frame which has been rotated 180 degrees anti-clockwise as illustrated in figure 5C.

For the counter-rotated frame, the scanning pattern starts with the bottom rightmost pixel in tile β_{N-1} and then scans leftwards all the pixels of the bottom-most line of all the tiles β_{N-2} through to β₀. Thereafter, the next line above is selected and scanning returns to the rightmost pixel in tile β_{N-1} and then scans leftwards all the pixels of the next line of all the tiles β_{N-2} through to β₀, and so on.

Accordingly, in order to provide pixel values to the display 40 at the correct time for the scanning pattern the tiles are retrieved from the frame buffer 20 in a different order. Hence, tiles β_{N-1} to β₀ are first read from the frame buffer 20 and stored in one group of 8 line buffers 80A. Once these tiles have been read, the group of 8 line buffers 80A can provide the pixel values via the transform logic 90 to the display 40. Concurrently with providing these pixel values to the display 40, tiles α_{N-1} to α₀ are read from the frame buffer 20 and stored in the other group of 8 line buffers 80B. Once these tiles have been read, this group of 8 line buffers 80B can provide the pixel values via the transform logic 90 to the display 40 whilst the next line of tiles are read from the frame buffer 20 and stored in the other group of 8 line buffers 80A, and so on until the whole frame has been read and provided to the display 40.

Once again, since the display 40 has rotated, it is necessary to also similarly counter-rotate the pixel values of each tile 70. This counter-rotation is performed by applying a transform to tiles 70 in the 8 line buffers 80A, 80B to generate a counter-rotated tile 70B. It will be appreciated that this transform could be performed as a separate process or could be performed as part of the writing into the 8 line buffers 80A, 80B or as part of the reading from the 8 line buffers 80A, 80B.

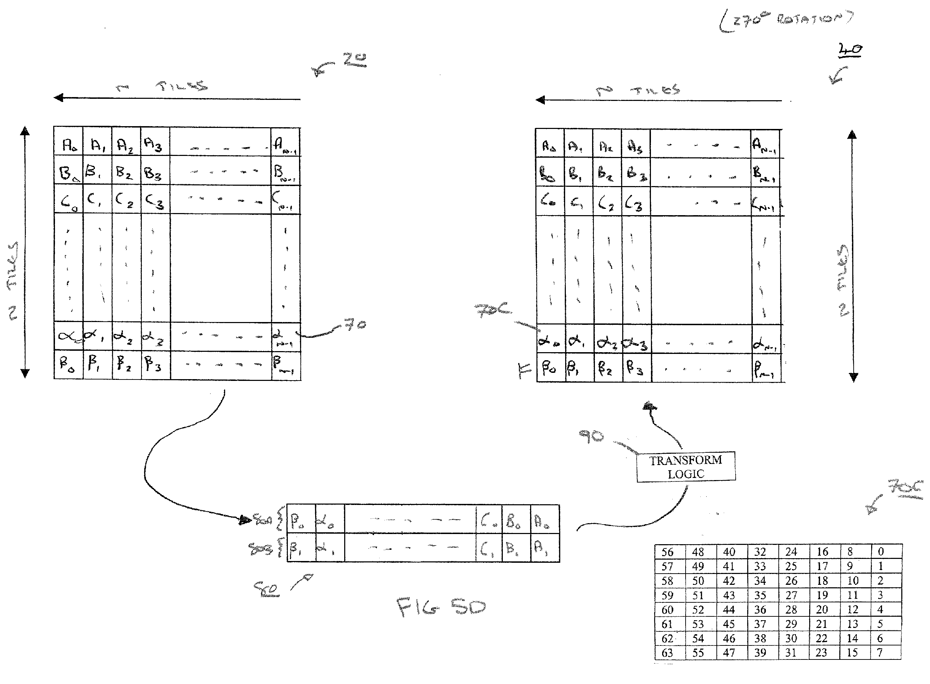

In figure 5D, the display has been rotated 270 degrees clockwise (90 degrees anti-clockwise) as indicated by the new location of the Π symbol. The rotation indicator 100 will provide an indication to the display controller 10' of the current orientation of the display 40. The display 40 continues to apply the traditional scanning pattern and, hence, if the tiles 70 were retrieved from the frame buffer 20 in the same order as for figure 5A then the frame displayed would be also rotated by 270 degrees clockwise.

Accordingly, in order to correct for the 270 degrees clockwise rotation, it is necessary to display a counter-rotated frame, i.e. a frame which has been rotated 270 degrees anti-clockwise as illustrated in figure 5D.

For the counter-rotated frame, the scanning pattern starts with the bottom leftmost pixel in tile β₀ and then scans upwards all the pixels of the leftmost line of all the tiles β₀ through to A₀. Thereafter, the next line to the right is selected and scanning returns to the bottom-most pixel in tile β₀ and then scans upwards all the pixels of the next line of all the tiles β₀ through to A₀, and so on.

Accordingly, in order to provide pixel values to the display at the correct time for the scanning pattern the tiles 70 are retrieved from the frame buffer 20 in a different order. Hence, tiles β₀ to A₀ are first read from the frame buffer 20 and stored in one group of 8 line buffers 80A. Once these tiles have been read, the group of 8 line buffers 80A can provide these pixel values via the transform logic 90 to the display 40. Concurrently with providing these pixel values to the display 40, tiles β₁ to A₁ are read from the frame buffer 40 and stored in the other group of 8 line buffers 80B. Once these tiles have been read, this group of 8 line buffers 80B can provide the pixel values via the transform logic 90 to the display 40 whilst the next line of tiles β₂ to A₂ are read from the frame buffer 20 and stored in the other group of 8 line buffers 80A, and so on until the whole frame has been read and provided to the display 40.

Once again, since the display 40 has rotated, it is necessary to also similarly counter-rotate the pixel values of each tile 70. This counter-rotation is performed by applying a transform to tiles 70 in the 8 line buffers 80A, 80B to generate a counter-rotated tile 70C. It will be appreciated that this transform could be performed as a separate process or could be performed as part of the writing into the 8 line buffers 80A, 80B or as part of the reading from the 8 line buffers 80A, 80B.

Accordingly, it can be seen that with the arrangement of pixel values into tiles and the provision of a suitable number of line buffers 80, the efficiency of accesses from the frame buffer 20 is unchanged irrespective of the order in which the tiles 70 are accessed for any of the four orientations of the display 40. This should be contrasted with the prior art approaches in which as many as every retrieved pixel value would be the subject of a non-sequential access.

As mentioned previously, the line buffers 80 are typically provided in SRAM which has desirable performance characteristics but is also expensive. Hence, in many applications may be desirable to be able to utilise the SRAM for more than one function.

However, with the approach described above, if the size of the tile is 2^{p} pixels by 2^{p} pixels then the minimum number of line buffers in a group has to be set to at least 2^{p}. Accordingly, even if it is desired to free some SRAM for other uses, at least 2^{p} line buffers in a group must be retained.

Also, it will be appreciated, that if instead the size of the tile is changed to accommodate a reduced number of line buffers, for example, from 8 by 8 pixel values to 2 by 2 pixel values in order enable a reduced number of line buffers to be provided then the contents of the frame buffer will need to be re-written to suit the change in line buffer numbers.

Hence, according to a further embodiment, the contents of the frame buffer 20 are arranged in a revised manner which enables different size tiles to be selected based upon the number of line buffers available, without needing to re-write the contents of the frame buffer to suit the revised number of line buffers.

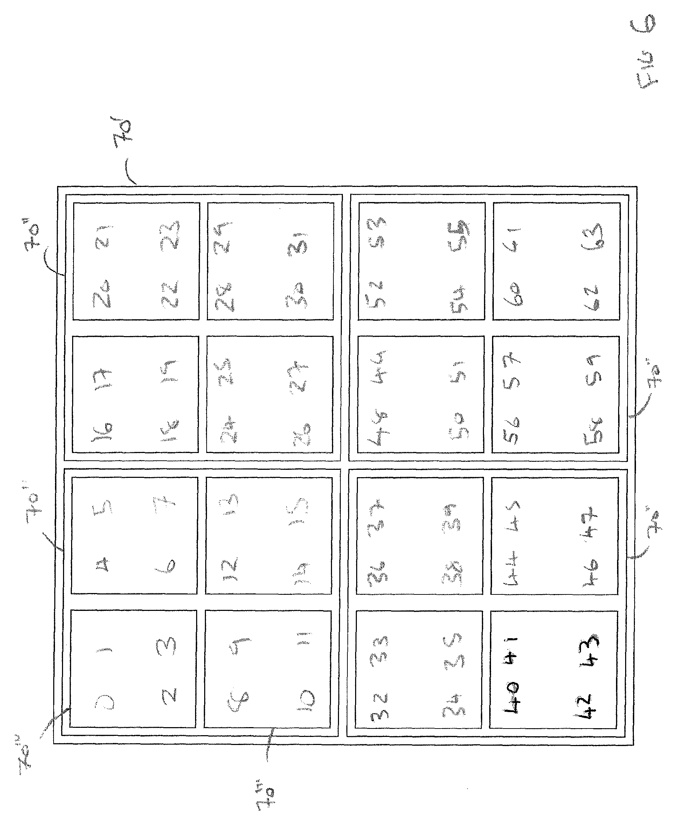

Figure 6 illustrates an example tile which illustrates the revised arrangement of pixel values in the frame buffer 20.

In a traditional addressing approach, the address of each pixel in the frame buffer can be expressed using a concatenated representation of the Cartesian coordinates of that pixel. Using this approach, pixels in the horizontal direction illustrated in figure 6 have increasing 'X' values (in this case having values between 0 and 7, from left to right), whilst pixels in the vertical direction have increasing 'Y' values (in this case also having values between 0 to 7, from top to bottom). It will be appreciated that the values of X and Y for the figure 6 arrangement can be expressed as a 3-bit number. More generally, the values of X and Y can be expressed as a 'n' bit number, i.e. X[n:0] and Y[n:0].

The traditional pixel address is obtained by concatenating the Y and X values together i.e. address = Y[2] Y[1] Y[0] X[2] X[1] X[0], or more generally Y[n] Y[n-1] Y[n-2]... Y[2] Y[1] Y[0] X[n] X[n-1] X[n-2]...X[2] X[1] X[0].

It will be appreciated that the number of pixels in the vertical and horizontal direction could be any other number than 8 such as, for example, 32, 64, 128, 512, 1024 or more generally, 2ⁿ, where n is a positive integer.

To illustrate this traditional addressing approach, consider, for example, the pixel indicated by value '18' in figure 6. This pixel is located at X=4 (X=100 in binary), Y=1 (Y=001 in binary). The address, when concatenated and expressed in binary would be 001 100, which is 12 in decimal (the pixel indicated by value '18' is the 12^{th} pixel when starting at the top left of the frame and counting along the first line to the end and then starting at the next line down, and so on). Similarly, the pixel indicated by value '46' in figure 6 is located at X=2 (Y=010 in binary), Y=7 (Y=111 in binary). The address, when concatenated and expressed in binary, would be 111 010, which is 58 in decimal (the pixel indicated by value '46' is the 58^{th} pixel when starting at the top left of the frame and counting along the first line to the end and then starting at the next line down, and so on).

In the approach illustrated in figure 6, the pixels are distributed in a zig-zag pattern in the frame buffer 20. To achieve this distribution, the address lines are reordered. For example, the traditional address of Y[2] Y[1] ] Y[0] X[2] X[1] ] X[0] for each pixel is reordered as Y[2] X[2] Y[1] X[1] Y[0] X[0], or more generally as Y[n] X[n] Y[n-1] X[n-1] Y[n-2] X[n-2]...Y[2] X[2] Y[1] X[1] Y[0] X[0]. Alternatively, the bits may be reordered as X[n] Y[n] X[n-1] Y[n-1] X[n-2] Y[n-2]...X[2] Y[2] X[1] Y[1] X[0] Y[0].

To illustrate this, as mentioned above, the pixel indicated by value '18' in figure 6 has a traditional address of 100 001, which corresponds to the location of the 12^{th} pixel in the frame buffer 20. The reordered address using the first reordering approach is 100100, which corresponds to pixel number '18' in decimal. Hence, by reordering the address lines, pixel number '18' is stored at the location normally used in the frame buffer 20 for the 12^{th} pixel. Similarly, as mentioned above, the pixel indicated by number '46' in figure 6 has a traditional address of 111 010, which corresponds to the location of the 58^{th} pixel in the frame buffer 20. The reordered address is 101110, which corresponds to pixel number '46'. Hence, by reordering the address lines, pixel number '46' is stored at the location normally used in the frame buffer 20 for the 58^{th} pixel.

Accordingly, the address of each pixel is defined by :- tilebaseaddress + sizeof(pixel) * pixelnumber (where pixelnumber is the number of the pixel position within the tile i.e. top-left pixel is pixelnumber '0' and bottom-right pixel is pixel number '64'). It will be appreciated that through this approach the pixel numbering is arranged such that consecutive pixels form a 'zig-zag' arrangement or distribution of differing granularity. For example, consecutive pixels 0, 1, 2 and 3 form a 'zig-zag' arrangement and consecutive tiles 70'" form a similar 'zig-zag' arrangement, as do consecutive tiles 70", and so on. The pixels in the display 40 are also arranged in a similar manner.

The smallest selectable tile arrangement 70'" comprises 2 pixel values by 2 pixel values (i.e. 2¹ pixel values by 2¹ pixel values). The next largest selectable tile arrangement 70" comprises 4 pixel values by 4 pixel values (i.e. 2² pixel values by 2² pixel values). The next largest selectable tile arrangement 70' comprises 8 pixel values by 8 pixel values (i.e. 2³ pixel values by 2³ pixel values), and so on.

Each size tile contains pixel values which are accessible as a sequential burst. For example, tile 70'" contains one non-sequentially accessible pixel value followed by three sequentially accessible pixel values, tile 70" contains one non-sequentially accessible pixel value followed by 15 sequentially accessible pixel values and tile 70' contains one non-sequentially accessible pixel value followed by 63 sequentially accessible pixel values. The pixel values are numbered consecutively as indicated in figure 6.

By arranging the pixel values in this way, if the number of line buffers changes the tile size can be changed in order to optimise the number of sequential accesses when accessing the frame buffer 20. By optimising the number of sequential accesses, the number of non-sequential accesses can be reduced and the access efficiency is increased.

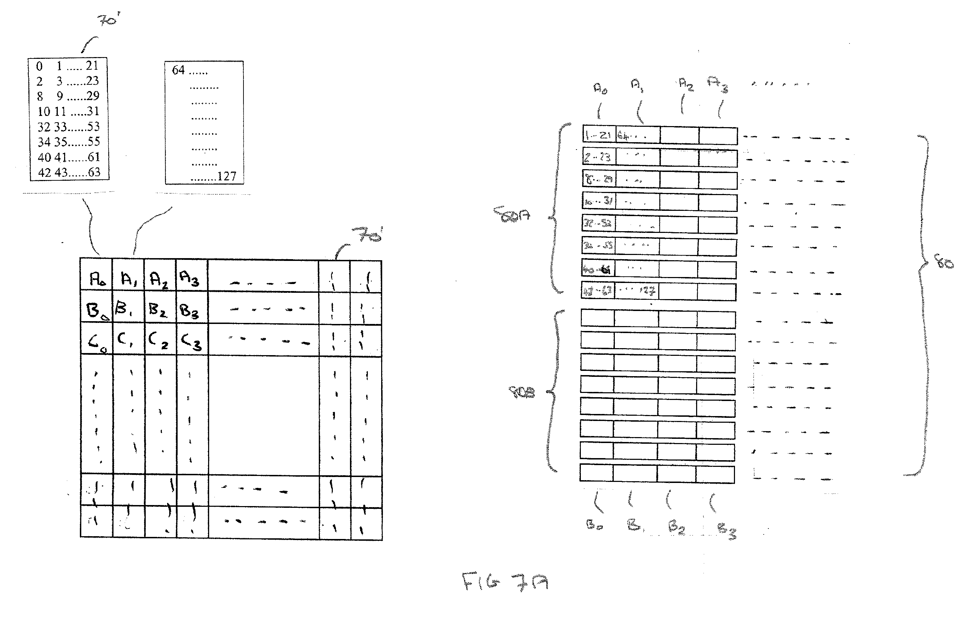

For example, if there are 16 line buffers 80 available, then the tile size is selected to be 8 pixels by 8 pixels 70' and two groups of 8 line buffers 80A, 80B are formed as illustrated by figure 7A.

Accordingly, the contents of A₀, A₁, A₂, A₃ etc can be retrieved and stored in the first group of line buffers 80A. Similarly, the contents of B₀, B₁, B₂, B₃ etc can be retrieved and stored in the second group of line buffers 80B.

Each tile 70' can be retrieved as one non-sequentially accessible pixel value followed by 63 sequential accesses of pixel values. Also, the order of tile retrieval can be varied for different orientations of the display 40 as illustrated in figures 5A to 5D above. It will be appreciated that the retrieval of the tiles 70' is equally efficient irrespective of the order of retrieval and hence this order of retrieval can be adapted dependent on the orientation of the display 40. Furthermore, the transform logic 90 can apply the same transform to the tile in order to provide the required counter-rotation.

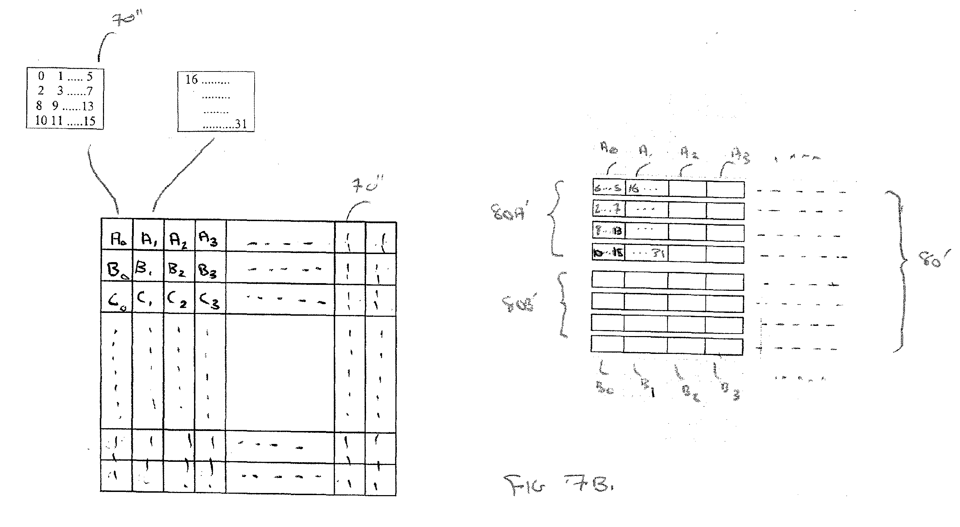

Now considering an alternative implementation where there are only 8 line buffers 80' available, then the tile size is selected to be 4 pixels by 4 pixels 70" and two groups of 4 line buffers 80A', 80B' are formed as illustrated by figure 7B. With half the number of buffers to that provided in figure 7A, it is still possible to read one non-sequentially accessible pixel value followed by 15 pixels values sequentially without needing to re-write the contents of the frame buffer 20.

Accordingly, the contents of A₀, A₁, A₂, A₃ etc can be retrieved and stored in the first group of line buffers 80A'. Similarly, the contents of B₀, B₁, B₂, B₃ etc can be retrieved and stored in the second group of line buffers 80B'.

Each tile 70" can be retrieved as one non-sequentially accessible pixel value followed by 15 sequential accesses. Also, the order of tile retrieval can be varied for different orientations of the display 40 as illustrated in figures 5A to 5D above. It will be appreciated that the retrieval of the tiles 70" is equally efficient irrespective of the order of retrieval and hence this order of retrieval can be adapted dependent on the orientation of the display 40. Furthermore, the transform logic 90 can be arranged to apply the same transform to that size of tile in order to provide the required counter-rotation.

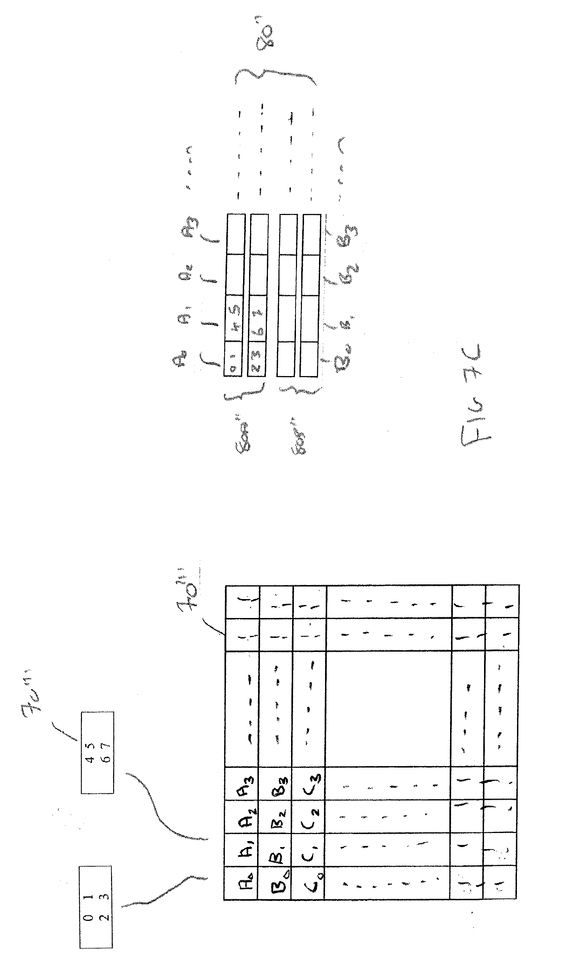

Now considering a minimal implementation where there are 4 line buffers 80" available, then the tile size is selected to be 2 pixels by 2 pixels 70"' and two groups of 2 line buffers 80A", 80B" are formed as illustrated by figure 7C. With a quarter of the number of buffers to that provided in figure 7A, it is still possible to read one non-sequentially accessible pixel value followed by 3 pixels values sequentially without needing to re-write the contents of the frame buffer 20.

Accordingly, the contents of A₀, A₁, A₂, A₃ etc can be retrieved and stored in the first group of line buffers 80A". Similarly, the contents of B₀, B₁, B₂, B₃ etc can be retrieved and stored in the second group of line buffers 80B".

Each tile 70"' can be retrieved as one non-sequentially accessible pixel value followed by 3 sequential accesses. Also, the order of tile retrieval can be varied for different orientations of the display 40 as illustrated in figures 5A to 5D above. It will be appreciated that the retrieval of the tiles 70"' is equally efficient irrespective of the order of retrieval and hence this order of retrieval can be adapted dependent on the orientation of the display 40. Furthermore, the transform logic 90 can be arranged to apply the same transform to that size of tile in order to provide the required counter-rotation.

Accordingly, it will be appreciated, that through this approach the number of sequential access to the frame buffer can be varied by varying the size of the tile to suit the number of line buffers available without needing to re-write the contents of the frame buffer to suit the revised number of line buffers.

Although particular embodiments have been described herein, it will be appreciated that the invention is not limited thereto and that many modifications and additions thereto may be within the scope of the invention.

## Claims

1. A display controller (5') for controlling a display (40) having a plurality of pixels (60) forming a frame, said frame comprising a plurality of lines of said pixels, said display controller comprising:
frame storage means (20) operable to store a frame of pixel values arranged as a plurality of tiles (70; 70' 70"; 70"'), each tile comprising a plurality of pixel values, each pixel value being associated with a pixel of said display;
a plurality of line buffers (80; 80' 80"), each line buffer being operable to store a line of pixel values of said frame; and
tile selection logic (10') operable to retrieve tiles from said frame storage means and to provide said tiles to said line buffers for subsequent supply to said display, said tile selection logic being operable to receive an indication of rotation of said display, and to retrieve said tiles in an order dependent on said indication of rotation so as to cause a counter-rotated frame to be displayed in the event that said display is rotated.

2. The display controller as claimed in claim 1, wherein said frame storage means is operable to store a frame of pixel values arranged in a predetermined order irrespective of any rotation of said display.

3. The display controller as claimed in claim 1 or 2, wherein a first pixel value of each tile stored in said frame storage means is accessible by a non-sequential access of said frame storage means and all subsequent pixel values of that tile are accessible by sequential accesses.

4. The display controller as claimed in any preceding claim, wherein each tile comprises 2^{p} by 2^{p} pixel values, where 'p' is a positive integer.

5. The display controller as claimed in claim 4, wherein 2^{p} line buffers are provided forming a line buffer group (80A, 80B; 80A', 80B'; 80A", 80B").

6. The display controller as claimed claim 4, wherein 2^{p}x2 line buffers are provided forming two line buffer groups and said tile selection logic is operable to store predetermined tiles from said frame storage means to one line buffer group (80A; 80A'; 80A") whilst the other line buffer group (80B; 80B'; 80B") supplies its contents to said display.

7. The display controller as claimed in any preceding claim, wherein said frame storage means is operable to store pixel values arranged to form tiles of selectable 2^{p} by 2^{p} pixel value sizes, each of said selectable tile sizes having a first pixel value accessible by a non-sequential access of said frame storage means and all subsequent pixel values of that tile accessible by sequential accesses.

8. The display controller as claimed in claim 7, wherein said tile size is selected based upon the number of line buffers accessible.

9. The display controller as claimed in claim 8, wherein if 2^{p}x2 line buffers are provided, then said tile size is selected to be 2^{p} by 2^{p} pixel values.

10. The display controller as claimed in any preceding claim, wherein said frame comprises 'n' by 'm' tiles.

11. The display controller as claimed in claim 10 when dependent on any one of claims 4 to 9, wherein each of said plurality of line buffers is operable to store up to the larger of 'n' multiplied by '2^{p}' and 'm' multiplied by '2^{p}' pixel values.

12. The display controller as claimed in any preceding claim, further comprising a display rotation indicator (100) operable to provide an indication to said tile selection logic of the orientation of said display, said orientation being one of four orthogonal orientations.

13. The display controller as claimed in any one of claims 2 to 12, wherein said display is arranged to apply pixel values to pixels in accordance with a predetermined scanning pattern and said tile selection logic is operable to retrieve tiles in said order from said frame storage means and to provide said tiles to said line buffers for subsequent supply to said display in accordance with said predetermined scanning pattern.

14. The display controller as claimed in any preceding claim, wherein said tile selection logic comprises transform logic (90) operable, in response to said indication of rotation of said display indicating that said display is rotated, to apply a transform to counter-rotate the pixels of each retrieved tile prior to supply to said display.

15. A method of controlling a display (40) having a plurality of pixels (60) forming a frame, said frame comprising a plurality of lines of said pixels, said method comprising the steps of:
storing a frame of pixel values arranged as a plurality of tiles (70; 70' 70"; 70"'), each tile comprising a plurality of pixel values, each pixel value being associated with a pixel of said display;
providing a plurality of line buffers (80; 80' 80"), each line buffer being operable to store a line of pixel values of said frame;
receiving an indication of rotation of said display; and
retrieving tiles and providing said tiles to said line buffers for subsequent supply to said display in an order dependent on said indication of rotation so as to cause a counter-rotated frame to be displayed in the event that said display is rotated.

16. The method of claim 15, further comprising the step of:
storing pixel values arranged to form tiles of selectable 2^{p} by 2^{p} pixel value sizes, each of said selectable tile sizes having a first pixel value accessible by a non-sequential access and all subsequent pixel values of that tile accessible by sequential accesses.

17. The method of claim 15 or 16, wherein said display is arranged to apply pixel values to pixels in accordance with a predetermined scanning pattern, the method further comprising the steps of:
retrieving tiles in said order; and
providing said tiles to said line buffers for subsequent supply to said display in accordance with said predetermined scanning pattern.

18. The method of any one of claims 15 to 17, further comprising the step of:
applying a transform, in response to said indication of rotation of said display indicating that said display is rotated, to counter-rotate the pixels of each retrieved tile prior to supply to said display.
